# EUROPÄISCHE PATENTSCHRIFT

(11) **EP 0 940 230 B1**
(45) Veröffentlichungstag und Bekanntmachung des Hinweises auf die Patenterteilung: **28.05.2003**
(21) Anmeldenummer: 99100752.7
(22) Anmeldetag: 16.01.1999
(51) Int. Cl.: B25J 15/04, B25J 19/00

(54) **Kupplung zur Verbindung von Werkstückgreifern mit einer Handhabungseinrichtung**
A coupling device for connecting grippers to a workpiece handling device
Dispositif d'accouplement entre les dispositifs de préhension et le dispositif de manutention

(30) Priorität: 05.03.1998 DE 19809371
(43) Veröffentlichungstag der Anmeldung: 08.09.1999
(73) Patentinhaber: Bilsing Automation GmbH, 57439 Attendorn (DE)
(72) Erfinder: Bilsing, Alfred, 57439 Attendorn (DE)
(74) Vertreter: Jochem, Bernd, Dipl.-Wirtsch.-Ing.

(56) Entgegenhaltungen:
- EP-A- 0 139 758
- US-A- 4 615 101
- US-A- 4 801 227

## Beschreibung

Die Erfindung betrifft eine motorisch betätigbare Kupplung zur Verbindung von Werkstückgreifern mit einer Handhabungseinrichtung, insbesondere für die Pressenverkettung, bestehend aus einem antriebsseitigen Festteil und einem greiferseitigen Anschlußteil gemäß dem Oberbegriff des Anspruchs 1.

Die Werkstückgreifer von Handhabungseinrichtungen bzw. Robotern müssen den Werkstücken individuell angepaßt sein. Bei Blechteilen, z. B. für Kraftfahrzeuge, haben sie normalerweise die Form eines rohrförmigen, beispielsweise 2 m langen Auslegerbaums mit mehreren Auslegerästen, an denen Sauggreifer und/oder Klammergreifer angebracht sind. Da die Blechteile in mehreren miteinander verketteten Pressen schrittweise verformt werden, bis sie ihre endgültige Form erreichen, und für jede Übergabe von einer zur nächsten Presse, dem jeweiligen Zwischenstadium entsprechend, ein besonders gestalteter Werkstückgreifer erforderlich ist, braucht man, um auf einer Pressenstraße mit z. B. sechs Pressen für ein bestimmtes Fahrzeugmodell z. B. 20 verschiedene Blechteile zu produzieren, 120 verschiedene Werkstückgreifer. Damit die Blechteillager möglichst klein gehalten werden können, werden meistens im Abstand von nur wenigen Stunden die Preßwerkzeuge ausgewechselt. Dementsprechend sind auch an einem Arbeitstag oft zehn mal die Werkstückgreifer sämtlicher Übergaberoboter an den Pressen zu wechseln.

Es gibt zwar einfache, manuell durch Klemmschrauben herzustellende Verbindungen zwischen dem Auslegerbaum eines Werkstückgreifers und dem ihn tragenden, gesteuert angetriebenen Teil des Roboters. In Anbetracht der sehr hohen Kapitalkosten einer Pressenstraße pro Zeiteinheit ist man jedoch auf einen schnellen Austausch der Werkstückgreifer angewiesen. Dies bedingt Schnellspannkupplungen, die dann, wenn automatische Greiferwechselsysteme zum Einsatz kommen, motorisch betätigbar sind.

Die bekannten derartigen Kupplungen bestehen typischerweise aus einem gehäuseartigen, antriebsseitigen Festteil, in das ein passendes, mit dem Auslegerbaum verbundenes Anschlußteil einsteckbar und durch formschlüssige Verbindungselemente, z. B. Rastbolzen oder Querzapfen hintergreifende Haken verriegelbar ist. Da alle Werkstückgreifer mit solch einem Anschlußteil versehen sein müssen, ergeben sich insgesamt für die Vielzahl der Greifer beträchtliche Gesamtkosten.

Motorisch betätigbare Greiferwechselsysteme sind etwa auch aus EP 0 139 758 A und US 4 615 101 A vorbekannt.

Der Erfindung liegt die Aufgabe zugrunde, eine motorisch betätigbare Kupplung der eingangs genannten Art zu schaffen, die ein sehr schnelles Kuppeln und Entkuppeln erlaubt, aber einen sehr einfachen Aufbau hat.

Vorstehende Aufgabe wird erfindungsgemäß durch die Merkmale des Anspruchs 1 gelöst.

Spannzangen finden z. B. Anwendung zum Spannen von Werkstücken bei der Drehbearbeitung. Dabei treten nur verhältnismäßig geringe Biegemomente auf, weil die Schneidwerkzeuge in verhältnismäßig geringem Abstand zum Spannfutter am Werkstück angreifen.

Demgegenüber müssen bei Werkstückgreifern, insbesondere an Pressen, beträchtliche Momente aufgenommen werden. Gleichzeitig werden sehr hohe Genauigkeitsanforderungen gestellt. Trotz eines langen Auslegerbaums, großer Gewichtsbelastung und starker Beschleunigungen wird eine eng begrenzte Wiederholgenauigkeit der Positionierbewegungen gefordert. Aus diesem Grunde sind bei den bekannten Schnellwechselkupplungen greiferseitig besondere, verhältnismäßig große Anschlußteile vorhanden, über die alle Kräfte vom Auslegerbaum auf den Roboterarm übertragen werden und die mit mehreren Passflächen hergestellt sein müssen, um einen exakten Sitz im Festteil zu gewährleisten. Demgegenüber kann bei der vorgeschlagenen Kupplung die Konstruktion viel einfacher sein, weil dort, wo die Spannzange des Festteils der Kupplung einen Rohrabschnitt des Auslegerbaums erfaßt und klemmt, kein zusätzliches Anschlußteil und keine Passflächen erforderlich sind. Für die Zentrierung der beiden Kupplungsteile mit Zwischenabstand zur Klemmstelle genügt greiferseitig eine Fase an der Stirnfläche des in den Festteil der Kupplung einführbaren Endes des Auslegerbaums. Alternativ kann auch eine Spannzange mit zwei mit Abstand angeordneten Klemmstellen Verwendung finden. In beiden Fällen braucht man greiferseitig überhaupt kein zusätzliches Anschlußteil. Als solches dient einfach nur der vorderste Rohrabschnitt des Auslegerbaums.

Bei einer dritten Ausführungsform ist greiferseitig eine konische Zentrierfläche an einem Deckel vorgesehen, der in das in die Spannzange einführbare Ende des Rohrabschnitts eingepaßt oder eingepreßt ist. Diese Ausführungsform hat den Vorteil, daß der Deckel die greiferseitigen Steckanschlußteile für Druckluft- oder andere Energie- oder Steueranschlüsse des Werkstückgreifers tragen kann.

In weiterer bevorzugter Ausgestaltung der Erfindung besteht die Spannzange in an sich bekannter Weise aus einer sich an einem längsgeschlitzten Ende konisch erweiternden Büchse, einem passenden Innenkonus an einem die geschlitzte Büchse aufnehmenden Gehäuse sowie einem Kraftzylinder zur axialen Bewegung der geschlitzten Büchse relativ zum Gehäuse und befindet sich die zentrierende Konusfläche auf Seiten des Festteils an einer mit dem relativ zum Gehäuse beweglichen Teil des Kraftzylinders und der geschlitzten Büchse verbundenen Fassung. Der Kolben des Kraftzylinders gleitet zweckmäßigerweise unmittelbar in einer Bohrung des Gehäuses, so daß für den Zylinder kein zusätzliches Teil erforderlich ist. Man erhält insgesamt eine sehr einfache Konstruktion des Festteils der Kupplung, wenn das Gehäuse eine vorzugsweise abgesetzte, durchgehende, am hinteren Ende durch einen Deckel abgeschlossene Bohrung aufweist, in die zwischen dem Kolben des Kraftzylinders und der Fassung eine dichte Trennwand eingesetzt ist.

Überraschenderweise stört es weder den Kupplungsvorgang noch die Zentrierfunktion, wenn in der bevorzugten Ausführungsform der Erfindung die konische Zentrierfläche im Festteil der Kupplung an der Fassung oder einem anderen beim Spannen der Spannzange mitbewegten Teil ausgebildet ist. Das liegt einerseits an der radialen Führung der Fassung in der Zylinderbohrung des Gehäuses, andererseits daran, daß ein verhältnismäßig kurzer axialer Verschiebeweg der längsgeschlitzten Büchse der Spannzange und der mit ihr verbundenen Fassung genügt, um die Klemmung und das Lösen des in die Spannzange eingeführten Rohrabschnitts zu bewirken. Während der kurzen axialen Verschiebung kann durch eine auf den Auslegerbaum ausgeübte axiale Kraft die gegenseitige Anlage der konischen Zentrierflächen gewährleistet werden, sofern nicht ohnehin nach dem Einführen des Endes des Auslegerbaums in die Spannzange eine Mitnahme bei der axialen Bewegung der längsgeschlitzten Büchse durch Reibung erfolgt.

Es hat sich herausgestellt, daß man trotz der notwendigen Bewegungen der Fassung zum Spannen und Lösen der Spannzange mit Vorteil Energie- und ggf. auch Steuerleitungen an die Fassung anschließen kann. So ist in weiterer bevorzugter Ausgestaltung der Erfindung vorgesehen, daß die Fassung mit mehreren Druckluftanschlüssen versehen ist, die sich durch Löcher im Gehäuse nach außen erstrecken, die ausreichend groß bemessen sind, um die axialen Bewegungen der Fassung im Gehäuse zu ermöglichen. Zweckmäßigerweise sind außerdem an der Fassung mit den Druckluftanschlüssen verbundene, axial ausgerichtete Steckanschlüsse vorhanden, die beim Einführen des Anschlußteils in die Spannzange mit passenden, am Abschlußdeckel des Auslegerbaums angebrachten und mit pneumatisch betätigbaren Elementen am Werkstückgreifer verbundenen Gegen-Steckanschlüssen dicht kuppelbar sind.

Ein Ausführungsbeispiel der Erfindung wird nachstehend anhand der Zeichnung näher erläutert. Es zeigen:
- Fig. 1: einen axialen Längsschnitt durch eine Kupplung eines Werkstückgreifers mit einem Roboterarm;
- Fig. 2: einen Querschnitt nach Schnittlinie II-II in Fig. 1;
- Fig. 3: einen axialen Längsschnitt entsprechend Fig. 1 durch ein weiteres Ausführungsbeispiel einer Kupplung eines Werkstückgreifers mit einem Roboterarm.

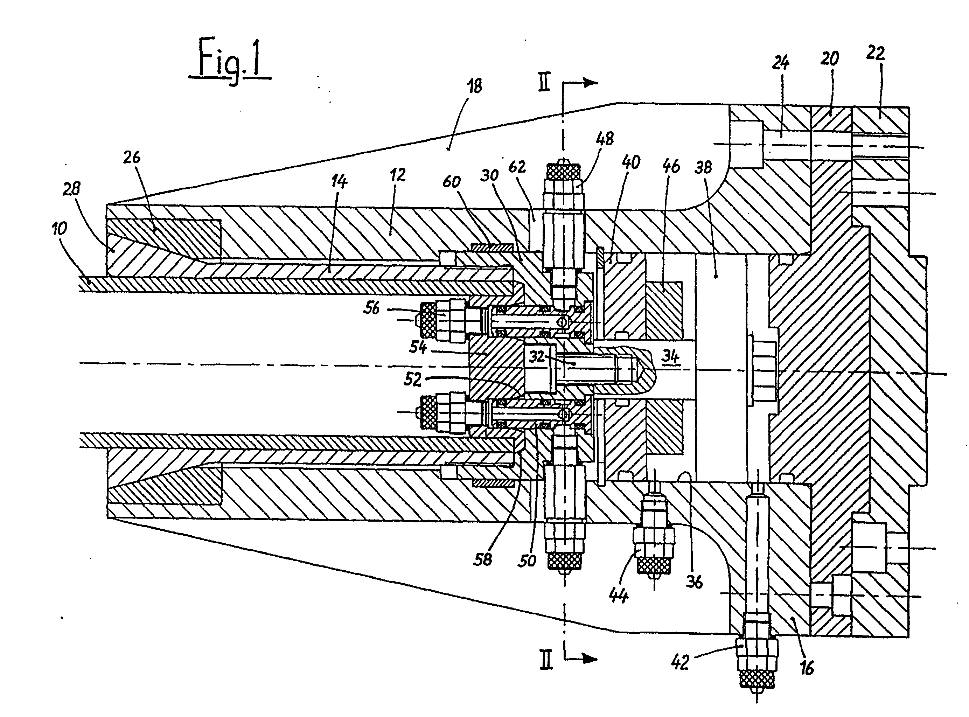

Fig. 1 zeigt von einem Werkstückgreifer für Blechteile nur den äußersten Rohrabschnitt 10 des Auslegerbaums. Dieser kann im Einzelfall je nach Größe des Werkstücks und den räumlichen Verhältnissen in den Pressen, aus denen die Werkstücke zu entnehmen bzw. in die sie einzulegen sind, eine Länge von mehr als 2 m haben. Andere Werkstückgreifer, die mit derselben Kupplung am Roboterarm zu befestigen sind, haben möglicherweise nur einen kurzen Rohrabschnitt 10. Es versteht sich, daß die rohrförmigen Enden aller Werkstückgreifer, die von derselben Kupplung gehalten werden sollen, denselben Außendurchmesser und eine ausreichende Länge haben müssen, um wechselweise in definierter Stellung in die Kupplung eingesetzt werden zu können.

Während der Rohrabschnitt 10 den greiferseitigen Anschlußteil der Kupplung bildet, besteht deren antriebsseitiger, d. h. am Ende eines Roboterarms angebrachter Festteil im wesentlichen aus einem Gehäuse 12,.das eine Spannzange 14 aufnimmt. Das Gehäuse 12 hat die Form eines an seinem hinteren Ende mit einem radialen Flansch 16 versehenen Zylinders, der durch mehrere über den Umfang verteilte, sich über seine Länge erstreckende äußere Rippen 18 versteift ist. Das hintere Ende des zylindrischen Gehäuses 12 ist durch einen Zylinderdeckel 20 dicht abgeschlossen. Er ist von hinten gegen den Flansch 16 geschraubt. Damit die gleiche Kupplung an unterschiedlich gestalteten Enden verschiedener Roboter angebracht werden kann, erfolgt die Befestigung über eine Adapterscheibe 22, die auf ihrer einen Seite der Befestigungsfläche des jeweils zugeordneten Roboters und auf ihrer gegenüberliegenden Fläche der Außenseite des Zylinderdeckels 20 angepaßt ist. Nach der Befestigung der Adapterscheibe 22 am Ende des Roboterarms wird die Kupplung durch Schrauben, die durch Löcher 24 im Flansch 16 und dem Zylinderdeckel 20 gesteckt werden, an der Adapterscheibe 22 festgeschraubt und mittels Zentrierbohrungen 25 zentriert.

Das Gehäuse 12 ist vorzugsweise ein Gußteil aus einer Aluminiumlegierung. Da dieses Material verhältnismäßig weich ist, ist innenseitig in das vordere Ende des zylindrischen Gehäuses 12 ein ringförmiger Einsatz 26 aus Stahl eingelassen, dessen innere Umfangsfläche sich von innen nach außen konisch erweitert. Sie wirkt zusammen mit dem sich vorn und radial nach außen konisch erweiternden vorderen Ende 28 der Spannzange 14. Diese hat im übrigen die Form einer mit mehreren über den Umfang verteilten und sich über den größten Teil der Länge erstreckenden Schlitzen versehenen Büchse aus gehärtetem Stahl. Diese Büchse ist an ihrem hinteren Ende in eine Fassung 30 eingeschraubt, die durch eine Befestigungsschraube 32 mit der Kolbenstange 34 eines in der Zylinderbohrung 36 des Gehäuses 12 axial verschieblich geführten Kolbens 38 verbunden ist. Die den Kolben 38 aufnehmende Zylinderkammer wird nach vorn durch eine Trennwand 40 begrenzt, die fest und dicht in die Zylinderbohrung 36 eingesetzt ist. Unter der Wirkung von Druckluft, die entweder über einen Druckluftanschluß 42 in den hinteren Teil der Zylinderkammer oder über einen weiteren Druckluftanschluß 44 in deren vorderen Teil eingelassen wird, verschiebt sich der Kolben 38 in die eine oder andere Richtung, wobei der Zylinderdeckel 20 und die Trennwand 40 in Verbindung mit einer an deren Rückseite anliegenden Scheibe 46 als Endanschläge dienen. Der maximale Hub des Kolbens 38 beträgt zwischen diesen beiden Endanschlägen im Beispielsfall nur etwa 3 - 5 mm.

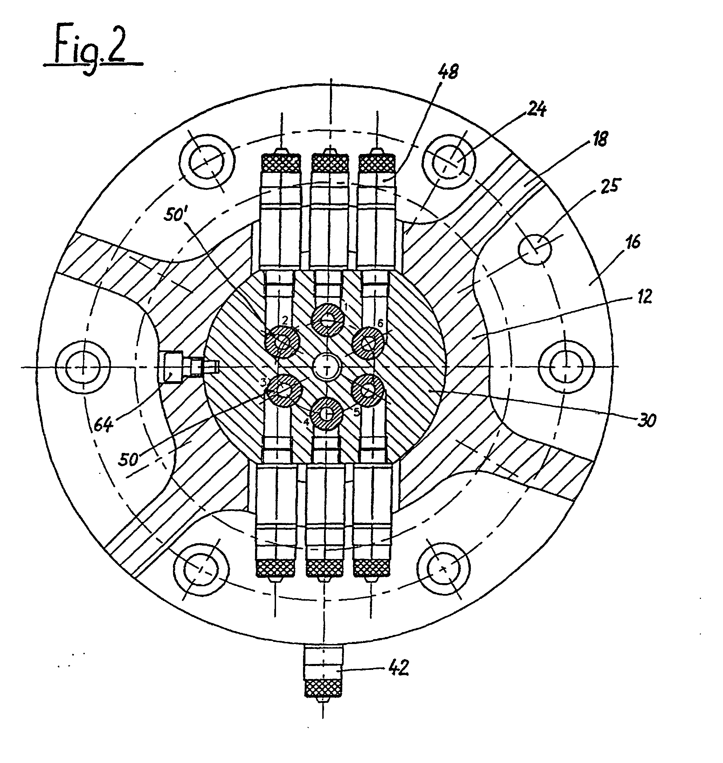

In die Fassung 30 sind oben und unten in paralleler Anordnung jeweils drei Luftanschlüsse 48 eingeschraubt (siehe auch Fig. 2). Sie stehen jeweils in Verbindung mit einem von sechs im Kreis angeordneten, axial in die Fassung 30 dicht eingesetzten, nach vorn herausragenden hohlen Bolzen 50, die Steckanschlüsse bilden. Sie wirken abdichtend zusammen mit passenden Gegen-Steckanschlüssen 52 in Form von Bohrungen in einem Deckel 54, der in das vorderste Ende des rohrförmigen Auslegerbaums eingepreßt ist. Innenseitig sind Luftanschlüsse 56 in die Bohrungen 52 eingeschraubt und über nicht gezeigte Luftleitungen mit durch Druckluft oder Vakuum betätigbaren Greif- und anderen Elementen am Werkstückgreifer verbunden. Die Steckverbindung zwischen den hohlen Bolzen 50 und den Gegen-Steckanschlüssen 52, 56 kommt beim Einführen des vorderen Rohrabschnitts des Auslegerbaums 10 in die Spannzange 14, 28 zustande. Wenn es erwünscht ist, daß die beiden Kupplungsteile immer nur in einer definierten relativen Drehwinkelstellung in Eingriff gebracht werden können, kann dies in einfacher Weise geschehen, indem gemäß Fig. 2 einer der Steckanschlüsse, im Beispielsfall der mit 50' bezeichnete, nicht auf demselben Radius wie die übrigen Luftführungsbolzen 50 angeordnet wird.

Im Ausführungsbeispiel nach Fig. 1 hat der Deckel 54 einen äußeren Flanschrand, der die vordere Stirnfläche des Auslegerbaums 10 überdeckt und dessen Umfangsfläche einen Zentrierkonus 58 mit einer Steigung von z. B. 20° bildet. Wenn das vordere Ende des Auslegerbaums 10 in die Spannzange eingeschoben wird, kommt der Zentrierkonus 58 an einem entsprechenden Innenkonus an der Fassung 30 zur Anlage. Es ist darauf zu achten, daß die gegenseitige Anlage der Konusflächen erhalten bleibt, wenn anschließend der Kolben 38 durch Druckluftzufuhr über den Luftanschluß 44 nach rechts verschoben wird und dabei die Fassung 30 und die längsgeschlitzte Büchse 14 mitnimmt, um die Spannzange zu spannen. Im gespannten Zustand wird der vordere Rohrabschnitt des Auslegerbaums dann einerseits im Klemmbereich der Spannzange, d. h. im Bereich der konischen Erweiterung 28, und andererseits mit Zwischenabstand zu dieser Klemmstelle durch den Zentrierkonus 58 am vordersten Ende zentriert gehalten. Zum Lösen der Kupplung braucht lediglich der Kolben 38 durch Druckluftzufuhr über den Luftanschluß 42 mit Bezug auf Fig. 1 nach links verschoben zu werden. Die einwandfreie Verschiebung der Fassung 30 wird durch einen Gleitringeinsatz 60 aus Kunststoff in der Gleitfläche der Zylinderbohrung des Gehäuses 12 gewährleistet, und in axialer Richtung ausreichend lang bemessene Durchstecklöcher 62 im zylindrischen Gehäuse 12 lassen die axiale Bewegung der Luftanschlüsse 48 zusammen mit der Fassung 30 zu. Damit die Fassung 30 gegen Drehung relativ zum Gehäuse 12 gesichert wird, ist sie an einer Stelle ihres Umfangs mit einer Längsnut versehen, in die gemäß Fig. 2 das zapfenförmige Ende einer Sicherungsschraube 64 eingreift.

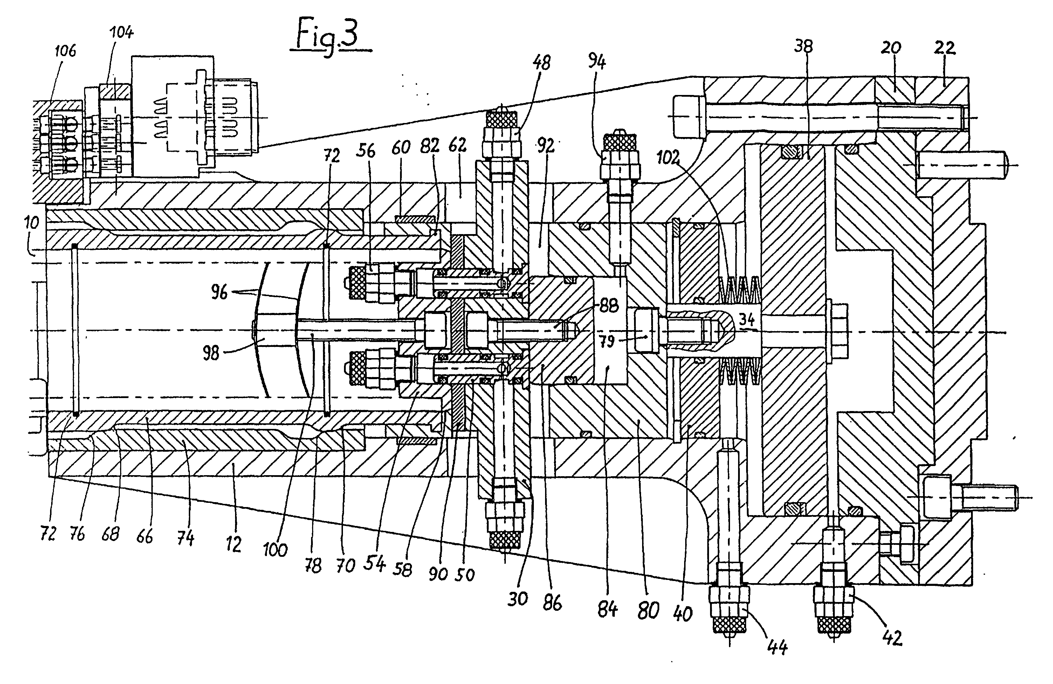

Bei dem Ausführungsbeispiel nach Fig. 3 haben viele Teile dieselbe Funktion oder sogar dieselbe Form wie bei dem Ausführungsbeispiel nach Fig. 1 und 2. Diese Teile sind in Fig. 3 mit denselben Bezugszeichen gekennzeichnet worden wie in Fig. 1 und 2. Auf sie braucht nachstehend nicht mehr näher eingegangen zu werden.

Ein wesentlicher Unterschied der Ausführungsform nach Fig. 3 gegenüber dem obenbeschriebenen Ausführungsbeispiel besteht darin, daß eine Spannzange 66 mit zwei sich nach vorn konisch erweiternden Flächen 68, 70 Verwendung findet. Die beiden konischen Außenflächen 68, 70 haben einen verhältnismäßig großen axialen Abstand, der vorzugsweise größer ist als die halbe Länge der Spannzange 66.

Eine solche Spannzange 66 besteht zweckmäßigweise aus durch axiale Trennschnitte herzustellenden Segmenten, die zusammenfallen würden, wenn sie nicht durch elastische, geschlitzte Sprengringe 72, z.B. Seeger-Ringe, die in inneren Nuten der Segmente der Spannzange 66 sitzen, auf einem Radius gehalten werden, der etwas größer ist als der Radius des Rohrabschnitts 10.

Entsprechend den beiden Außenkonusflächen 68, 70 wirkt mit der Spannzange 66 ein in das Gehäuse 12 eingelassener büchsenförmiger Einsatz 74 mit zwei konischen Innenflächen 76, 78 zusammen, die denselben Abstand haben wie die Außenkonusflächen 68 und 70. Sämtliche Konusflächen haben mindestens zwei Bereiche unterschiedlicher Steigung. Wird zum Spannen des Rohrabschnitts 10 die Spannzange 66 mit Bezug auf Fig. 3 nach rechts gezogen, wirken zunächst steilere Konusflächen zusammen und bewirken eine schnelle radiale Spannbewegung der Spannzange 66. Bei weiterer axialer Bewegung der Spannzange 66 mit Bezug auf Fig. 3 nach rechts kommen dann die flacheren Bereiche der Konusflächen zur Wirkung, so daß nicht mehr mit gleicher radialer Geschwindigkeit, dafür aber mit wesentlich höherer Kraft gespannt werden kann.

Bei dem Ausführungsbeispiel nach Fig. 3 ist die Kolbenstange 34 des Antriebskolbens 38 nicht unmittelbar mit der Fassung 30 fest verbunden, sondern über eine Schraube 79 mit einem Käfig 80, an dem die Fassung 30 axial verschieblich gelagert ist. Das mit Bezug auf Fig. 3 linke Ende des im wesentlichen büchsenförmigen Käfigs 80 ist mit einer inneren Ringnut versehen, in die eine Ringrippe 82 am rechten Ende der Segmente der Spannzange 66 eingreift, so daß bei einer axialen Verschiebung des Käfigs 80 mittels des Kolbens 38 die Spannzange 66 mitgenommen wird. Die Eingriffsverbindung zwischen den Segmenten der Spannzange 66 und dem Käfig 80 ist so ausgeführt, daß bei der im wesentlichen radialen Spannbewegung der Segmente der Spannzange 66 die Ringrippe 82 in der sie aufnehmenden Ringnut eine radiale Bewegung ausführen kann und/oder die Segmente der Spannzange 66, ausgehend von ihrer radial inneren, am Rohrabschnitt 10 anliegenden Spannstellung eine begrenzte Schwenkbewegung um ihr rechtes Ende radial nach außen ausführen können.

Wie weiterhin aus Fig. 3 ersichtlich, ist die Konusfläche 58 auf seiten des Festteils nicht an der Fassung 30, sondern am Käfig 80 vorgesehen. Dieser ist in der Bohrung des Gehäuses 12 geführt. Das rechte Ende des Käfigs 80 bildet einen Zylinder 84, in dem ein zweiter Kolben 86 axial verschieblich geführt ist. Er ist über eine Schraube 88 fest mit der Fassung 30 verbunden, deren mit Bezug auf Fig. 3 linke Seite durch eine Dämpfungsplatte 90 gebildet ist. Wegen der Verschieblichkeit der Fassung 30 zusammen mit dem Kolben 86 relativ zum Käfig 80 erstrecken sich die Luftanschlüsse 48 außer durch die Löcher 62 im Gehäuse 12 auch durch ausreichend lang bemessene Löcher 92 in der Umfangswand des Käfigs 80. Die Verschieblichkeit der Fassung 30 relativ zum Käfig 80 gestattet es, daß nach dem Einführen des Rohrabschnitts 10 in das Festteil der Kupplung zunächst mittels der Konusflächen 58 vorzentriert und dann der Rohrabschnitt 10 durch die Segmente der Spannzange 66 gespannt und dabei zentriert wird, bevor die Steckverbindung zwischen den hohlen Bolzen 50 und den Gegen-Steckanschlüssen 52, 56 hergestellt wird. Die Konstruktion nach Fig. 3 hat den Vorteil, daß dann, wenn der Rohrabschnitt 10 nicht genau in zentrierter Lage in die Spannzange 66 eingeführt wird, der gegen die hohlen Bolzen 50 stoßende Deckel 54 die Fassung 30 mit Bezug auf Fig. 3 nach rechts verschiebt.

Wenn dann die Spannzange 66 gespannt und dabei der Rohrabschnitt 10 zentriert worden ist, wird über einen Luftanschluß 94 der Zylinder 84 mit Druckluft beaufschlagt, so daß der Kolben 86 und die Fassung 30 mit Bezug auf Fig. 3 nach links verschoben werden und dabei die hohlen Bolzen 50 in die Gegen-Steckanschlüsse 52, 56 eindringen. Durch das Herstellen der Steckverbindungen erst nach dem Zentrieren des Rohrabschnitts 10 vermeidet man Beschädigungen an den Dichtungen und anderen Teilen der Steckanschlüsse.

Eine weitere Verbesserung der Ausführung nach Fig. 3 im Verhältnis zum Ausführungsbeispiel nach Fig. 1 und 2 besteht in der Halterung des Deckels 54 am Ende des Rohrabschnitts 10 mittels einer oder mehrerer elastischer Scheiben 96, die im Zentrum mit einer Gewindebuchse 98 verbunden sind und einen Durchmesser haben, der etwas größer ist als der Innendurchmesser des Rohrabschnitts 10, so daß sie sich beim Eindrücken in diesen, wie in der Zeichnung dargestellt, durchbiegen. Ein in die Gewindebuchse 98 eindrehbarer Gewindebolzen 100 verspannt den Deckel 54 mit den in den Rohrabschnitt 10 eingeklemmten elastischen Scheiben 96. Zum Lösen des Deckels 54 vom Rohrabschnitt 10 braucht lediglich der Schraubenbolzen 100 herausgeschraubt zu werden. Die elastischen Scheiben 96 sind mit Löchern zur Durchführung der im Rohrabschnitt 10 verlegten Luft- und Signalleitungen versehen.

Schließlich ist als weitere Besonderheit der Ausführung nach Fig. 3 eine Feder 102-zu erwähnen, die den Antriebskolben 38 nach rechts zu drücken versucht, d.h. das Bestreben hat, die Spannzange zu spannen. Dadurch wird gewährleistet, daß auch bei einem Druckabfall im Druckluftanschluß 44 die Spannzange gespannt bleibt.

Es versteht sich, daß die in der Zeichnung gezeigten und vorstehend beschriebenen Einzelteile des Festteils und des Anschlußteils der Kupplung im Detail anders gestaltet sein können. Wenn keine inneren Steckanschlüsse für Druckluft oder Vakuum gebraucht werden, können die Teile 48 - 56 entfallen, und die vordere Stirnfläche des Auslegerbaums 10 könnte mit dem Zentrierkonus 58 versehen sein. In beiden Ausführungen, mit und ohne Deckel 54, ist der Anschlußteil der Kupplung wesentlich einfacher und kostengünstiger herzustellen als bei den bisher gebräuchlichen kraftbetätigten Kupplungen. Statt eines motorischen Antriebs der Spannzange durch einen linear wirkenden Kraftzylinder ließe sich auch ein Drehantrieb einsetzen, der z. B. über ein Schraubgetriebe eine Linearbewegung erzeugt. Für die Herstellung elektrischer Verbindungen können auf der Außenseite des Gehäuses 12 und des Rohrabschnitts 10 Stecker 104 und Buchsen 106 angebracht sein, die beim Einführen des Rohrabschnitts 10 in die Spannzange 66 in Kontakt gebracht werden.

## Patentansprüche

1. Motorisch betätigbare Kupplung zur Verbindung von Werkstückgreifern mit einer Handhabungseinrichtung, insbesondere für die Pressenverkettung, bestehend aus einem antriebsseitigen Festteil (12, 14, 30, 38) und einem greiferseitigen Anschlußteil (10, 54), wobei der Festteil (12, 14, 30, 38) der Kupplung eine motorish betätigbare Spannzange (14, 26, 28, 30, 38) aufweist **dadurch gekennzeichnet, daß** der Anschlußteil (10, 54) ein Rohrabschnitt ist, der an seinem vordersten Ende mit Zwischenabstand zu der am vorderen Ende der Spannzange befindlichen Klemmstelle (28) auch im Festteil (12, 14, 30) am hinterar Ende der Spannzange zentrierbar ist.

2. Kupplung nach Anspruch 1, **dadurch gekennzeichnet, daß** der Rohrabschnitt (10) durch eine mit Zwischenabstand zu der am vorderen Ende der Spannzange (14) befindlichen Klemmstelle (28) angeordnete zweite Klemmstelle der Spannzange zentrierbar ist.

3. Kupplung nach Anspruch 1, **dadurch gekennzeichnet, daß** der Rohrabschnitt (10) an seinem in die Spannzange (14) einführbaren Ende über Konusflächen (58) zentrierbar ist.

4. Kupplung nach Anspruch 3, **dadurch gekennzeichnet, daß** der Rohrabschnitt (10) an seinem in die Spannzange (14) einführbaren Ende durch einen eingepaßten oder eingepreßten Deckel (54) abgeschlossen ist, der mit einer der zentrierenden Konusflächen (58) versehen ist.

5. Kupplung nach Anspruch 3 oder 4, **dadurch gekennzeichnet, daß** die Spannzange in an sich bekannter Weise aus einer sich an einem längsgeschlitzten Ende konisch erweiternden Büchse (14), einem passenden Innenkonus (26) an einem die geschlitzte Büchse (14) aufnehmenden Gehäuse (12) sowie einem Kraftzylinder (38) zur axialen Bewegung der geschlitzten Büchse (14) relativ zum Gehäuse (12) besteht, und daß die zentrierende Konusfläche (58) auf Seiten des Festteils an einer mit dem relativ zum Gehäuse (12) beweglichen Teil (38) des Kraftzylinders und der geschlitzten Büchse (14) verbundenen Fassung (30) ausgebildet ist.

6. Kupplung nach Anspruch 5, **dadurch gekennzeichnet, daß** die Fassung (30) mit mehreren Druckluft- und/oder Vakuumanschlüssen versehen ist, die sich durch Löcher (62) im Gehäuse (12) nach außen erstrecken, die ausreichend groß bemessen sind, um die axialen Bewegungen der Fassung (30) im Gehäuse (12) zu ermöglichen, wobei mit den Druckluft- bzw. Vakuumanschlüssen verbundene, axial ausgerichtete Steckanschlüsse (50, 50') beim Einführen des Anschlußteils (10, 54) in die Spannzange (14) mit passenden, am Deckel (54) angebrachten und mit pneumatisch betätigbaren Elementen am Werkstückgreifer verbundenen Gegen-Steckanschlüssen (52, 56) dicht kuppelbar sind.

7. Kupplung nach Anspruch 3 oder 4, **dadurch gekennzeichnet, daß** die Spannzange (66) aus den Segmenten einer in Längsrichtung mehrfach durchtrennten Büchse besteht, die durch in innere Ringnuten eingesetzte, radial elastische Ringe (72) auf einem etwas größer als der Radius des Rohrabschnitts (10) bemessenen Radius gehalten sind, mit ihren hinteren Enden (82) axial fest, aber begrenzt radial beweglich in einen verschieblich in einem Gehäuse (12) geführten Käfig (80) eingreifen und mit zwei mit Zwischenabstand von wenigstens etwa der halben Segmentlänge angeordneten, sich nach vorn erweiternden, äußeren konischen Flächen (68, 70) ausgebildet sind, die mit jeweils einem passenden Innenkonus (76, 78) am Gehäuse (12, 74) zusammenwirken.

8. Kupplung nach Anspruch 7, **dadurch gekennzeichnet, daß** die Konusflächen (68, 70) einen zu Beginn eines Spannvorgangs wirksamen steileren und einen anschließend wirksamen flacheren Bereich haben.

9. Kupplung nach Anspruch 7, **dadurch gekennzeichnet, daß** am Käfig (80) eine Konusfläche (58) vorhanden ist, die mit der Konusfläche am Rohrabschnitt (10) oder dem diesen abschließenden Deckel (54) zentrierend zusammenwirkt.

10. Kupplung nach Anspruch 7, **dadurch gekennzeichnet, daß** der Käfig (80) durch eine Feder (102) in derjenigen axialen Richtung vorbelastet ist, in welcher er die Spannzange (66) spannt.

11. Kupplung nach Anspruch 7, **dadurch gekennzeichnet, daß** in dem Käfig (80) eine mit einem Kolben (86) verbundene Fassung (30) axial verschieblich geführt ist, an der mehrere Druckluft- und/oder Vakuumanschlüsse (48) angebracht sind, die sich durch Löcher (92, 62) im Käfig (80) und im Gehäuse (12) nach außen erstrecken, welche ausreichend groß bemessen sind, um die axialen Bewegungen der Fassung (30) im Käfig (80) und Gehäuse (12) zu ermöglichen, und daß nach dem Spannen der Spannzange (66) der Kolben (86) durch Beaufschlagung mit Druckfluid zum Rohrabschnitt (10) hin vorschiebbar ist und dabei mit den Druckluft- bzw. Vakuumanschlüssen (48) verbundene, axial ausgerichtete Steckanschlüsse (50) mit passenden, am Deckel (54) angebrachten und mit pneumatisch betätigbaren Elementen am Werkstückgreifer verbundenen Gegen-Steckanschlüssen (52, 56) dicht kuppelbar sind.

## Claims

1. A motor-actuable coupler for connecting workpiece grippers with a manipulating device, in particular for the interlinking of stamping presses, consisting of a fixed element (12, 14, 30, 38) with a motor-actuable collet chuck (14, 26, 28, 30, 38) on the drive side and a connecting element (10, 54) on the gripper side, **characterized in that** the connecting element (10, 54) is a tube section which also at its foremost end is centered in the fixed element (12, 14, 30) at the rear end of the collet chuck at an intermediate distance from the clamping area (28) located at the front end of the collet chuck.

2. A coupler in accordance with claim 1, **characterized in that** the tube section (10) is centered by means of a second clamping area of the collet chuck (14) spaced apart from the clamping area (28) located at the front end of the collet chuck (14).

3. A coupler in accordance with claim 1, **characterized in that** the tube section (10) is centered by means of cone surfaces (58) at its end which is insertable into the collet chuck (14).

4. A coupler in accordance with claim 3, **characterized in that**, at its end which is insertable into the collet chuck (14), the tube section (10) is closed by a fitted or pressed in cover (54) provided with one of the centering cone surfaces (58).

5. A coupler in accordance with claim 3 or 4, **characterized in that** the collet chuck conventionally consists of a bushing (14), which is conically widened on a longitudinally slit end, a fitted inner cone (26) on a housing (12) receiving the slit bushing (14), and of a power cylinder (38) for the axial movement of the slit bushing (14) in relation to the housing (12), and that the centering cone surface (58) on the side of the fixed element is provided on a holder (30) connected with the slit bushing (14) and the part (38) of the power cylinder which is movable in relation to the housing (12).

6. A coupler in accordance with claim 5, **characterized in that** the holder (30) is equipped with several compressed air and/or vacuum connections, which extend outward through holes (62) in the housing (12), which holes are of sufficient size for making the axial movements of the holder (30) in the housing (12) possible, wherein, in the course of inserting the connecting element (10, 54) into the collet chuck (14), axially oriented plug connectors (50, 50') which are connected with the compressed air and/or vacuum connections are tightly connected with counter plug connectors (52, 56) arranged on the cover (54) and connected with pneumatically actuable elements on the workpiece gripper.

7. The coupler of claim 3 or 4, **characterized in that** the collet chuck (66) comprises the segments of a bushing severed multiple times longitudinally, the segments being held on a radius somewhat greater than the radius of the tube section (10) by radially elastic rings (72) that are inserted into internal annular grooves, the rear ends (82) of the segments engaging a cage (80) in an axially fixed but limitedly radially movable manner, the cage being guided displaceably in a housing (12), and the segments being embodied with two outer conical faces (68, 70), which are disposed at an intermediate spacing of at least approximately half the length of one segment and widen toward the front and which each cooperate with an inner conical face (76, 78), fitting them, on the housing (12, 74).

8. The coupler of claim 7, **characterized in that** the conical faces (68, 70) have one steeper region that is effective at the onset of a tightening operation and one flatter region effective subsequently.

9. The coupler of claim 7, **characterized in that** on the cage (80) there is a conical face (58), which cooperates in centering fashion with the conical face on the tube section (10) or on the cover (54) closing the tube section.

10. The coupler of claim 7, **characterized in that** the cage (80) is prestressed by a spring (102) in the axial direction in which the cage tightens the collet chuck (66).

11. The coupler of claim 7, **characterized in that** a holder (30), connected to a piston (86) is axially displaceably guided in the cage (80), and a plurality of compressed-air and/or vacuum connections (48) are mounted on the holder, extending to the outside through holes (92, 62) in the cage (80) and in the housing (12), the holes being dimensioned large enough to enable the axial motions of the holder (30) in the cage (80) and the housing (12), and that after the collet chuck (66) is tightened, the piston (86) can be displaced forward toward the tube section (10) by imposition of compressed fluid and in the process axially oriented plug connectors (50) connected to the compressed-air or vacuum connections (48) can be coupled tightly to fitting counterpart plug connectors (52, 56) mounted on the cover (54) and communicating with pneumatically actuatable elements on the workpiece gripper.

## Revendications

1. Dispositif d'accouplement à commande motorisée, pour relier des dispositifs de préhension de pièces à un dispositif de manutention, en particulier dans une ligne de presses, composé d'une partie de raccordement (10, 54) côté préhension et d'une partie fixe (12, 14, 30, 38) comprenant une pince de serrage (14, 26, 28, 30, 38) actionnable par un moteur,
**caractérisé en ce que**
la partie de raccordement (10, 54) est un élément tubulaire qui, à son extrémité la plus avancée située à une certaine distance de la zone de serrage (28) située à l'extrémité avant de la pince de serrage, peut être également centré dans la partie fixe (12, 14, 30) à l'extrémité arrière de la pince de serrage.

2. Dispositif d'accouplement selon la revendication 1,
**caractérisé en ce que**
l'élément tubulaire (10) peut être centré par une seconde zone de serrage située à une certaine distance de la zone de serrage (28) qui se trouve à l'extrémité avant de la pince de serrage (14).

3. Dispositif d'accouplement selon la revendication 1,
**caractérisé en ce que**
l'élément tubulaire (10) peut être centré par des portées coniques (58) à son extrémité introduite dans la pince de serrage (14).

4. Dispositif d'accouplement selon la revendication 3,
**caractérisé en ce que**
l'élément tubulaire (10), à son extrémité qui peut être introduite dans la pince de serrage (14), est obturé par un couvercle (54) ajusté ou emmanché à force et qui est équipé d'une des portées coniques de centrage (58).

5. Dispositif d'accouplement selon l'une quelconque des revendications 3 ou 4
**caractérisé en ce que**
la pince de serrage est composée, de manière connue en soi, d'une douille (14) s'évasant en cône à une extrémité fendue en long, d'un cône interne (26) s'ajustant sur un boîtier (12) accueillant la douille fendue (14) ainsi que d'un vérin (38) pouvant déplacer axialement la douille fendue (14) par rapport au boîtier (12), la portée conique de centrage (58) du côté de la partie fixe étant prévue sur une monture (30) reliée à la partie (38) du vérin mobile par rapport au boîtier (12), et à la douille fendue (14).

6. Dispositif d'accouplement selon la revendication 5,
**caractérisé en ce que**
la monture (30) est équipée de plusieurs raccords d'air comprimé et/ou de vide qui s'étendent à l'extérieur à travers des perçages (62) du boîtier étant de dimensions suffisantes pour pouvoir déplacer la monture (30) axialement dans le boîtier (12), et qui sont reliés à des raccords emmanchables (50, 50') dirigés axialement qui peuvent, quand on introduit la partie de raccordement (10, 54) dans la pince de serrage (14), être accouplés de manière étanche des contreparties de raccordement (52, 56) prévues sur le couvercle (54) et reliées à des éléments, actionnables pneumatiquement, montés sur le dispositif de préhension.

7. Dispositif d'accouplement selon l'une quelconque des revendications 3 ou 4,
**caractérisé en ce que**
la pince de serrage (66) est composée des segments d'une douille divisée plusieurs fois dans le sens de la longueur, qui sont maintenus par des bagues (72) élastiques radialement, insérées dans des rainures internes, sur un rayon un peu supérieur à celui de l'élément tubulaire (10), et qui avec leurs extrémités arrières (82) s'engagent de manière axialement fixe, mais radialement limitée mobile dans une cage (80) pouvant coulisser dans le boîtier (12), ces segments présentant deux portées coniques externes (68, 70) s'évasant vers l'avant, espacées entre elles d'environ la moitié de la longueur du segment et coopérant chacune avec un cône interne ajusté (76, 78) que porte le boîtier (12, 74).

8. Dispositif d'accouplement selon la revendication 7,
**caractérisé en ce que**
les portées coniques (68, 70) mettent en oeuvre, au début d'une action de serrage, une zone active assez pentue et, à la fin d'une action de serrage, une zone active assez peu pentue.

9. Dispositif d'accouplement selon la revendication 7,
**caractérisé en ce que**
la cage (80) présente une portée conique (58) qui coopère avec effet de centrage, avec la portée conique du segment tubulaire (10) ou avec le couvercle (54) obturant celui-ci.

10. Dispositif d'accouplement selon la revendication 7,
**caractérisé en ce que**
un ressort (102) précontraint la cage (80) dans le sens axial correspondant au serrage de la pince de serrage (66).

11. Dispositif d'accouplement selon la revendication 7,
**caractérisé en ce que**
- dans la cage (80) peut coulisser axialement une monture (30) reliée à un piston (86) et portant plusieurs raccords d'air comprimé et/ou de vide (48) qui s'étendent à l'extérieur par des perçages (92, 62) dans la cage (80) et dans le boîtier (12), les perçages étant de dimensions suffisantes pour pouvoir déplacer axialement la monture (30) dans la cage (80) et dans le boîtier (12), et
- après serrage de la pince de serrage (66) le piston (86) peut coulisser par action du fluide de pression en direction de l'élément tubulaire (10), et ainsi des raccords emmanchables (50) dirigés axialement et reliés aux raccords d'air comprimé et/ou de vide (48) peuvent être accouplés de manière étanche à des contre-raccords (52, 56) prévus sur le couvercle (54) et reliés à des éléments, actionnables pneumatiquement, montés sur le dispositif de préhension.
